# EUROPEAN PATENT APPLICATION

(11) **EP 2 793 115 A1**
(43) Date of publication of application: **22.10.2014**
(21) Application number: 14164197.7
(22) Date of filing: 10.04.2014
(51) Int. Cl.: G06F 3/048, G06F 3/0482

(54) **Method of animating changes in a list**

(30) Priority: 18.04.2013 EP 13164224
(71) Applicant: Océ-Technologies B.V., 5914 CA Venlo (NL)
(72) Inventor: Bergmans, Jacques J.H., 5971 DH Grubbenvorst (NL)
(74) Representative: van de Sande, Jacobus

(57) **Abstract**

A method of animating a change in the arrangement of listed items (22) in a list (20) that is displayed on a screen, comprising by a step of fading-in or -out at least one listed item (22).

## Description

The invention relates to a method of animating a change in the arrangement of listed items in a list, comprising a number of subsequent positions, that is displayed on a screen wherein the items of the list are arranged in rows and columns.

The invention further relates to a user interface for an apparatus such as a printer or copier, comprising a screen and a controller adapted to display at least one two dimensional list on the screen.

In case of a printer, for example, it is frequently desired to display a list of registered users, a list of print jobs waiting in the print queue, or the like, on the screen of the user interface. Typically, the listed items are arranged in a specific order, e.g. in alphabetical order or, in case of print jobs, in the order in which the jobs are to be processed. When the order in the list needs to be changed for some reason, e.g. because a print job has been completed and shall be removed from the list or because a job is to be added or deleted upon a machine event or a command from an operator, this should be communicated to the operator or user in an intuitive way.

When the list is only one-dimensional, i.e. when the listed items are arranged in a single row or column, a straightforward way of communicating the changes is to animate a movement of the affected listed items along the row or column. For example, when a listed item is deleted, all subsequent items may be shifted by one position, so as to fill the gap left by the deleted item while preserving the order in which the items will appear. Similarly, when an item shall be added in a certain position, it is convenient to animate a movement of all subsequent items by one position, so that a blank is created in the list, and the new item will then be inserted in the blank.

In many cases it is desirable, however, to display a list on the screen in two-dimensional form so that when, for example, the length of a row of listed items exceeds the width of the screen, subsequent items may be displayed in a second row below the first row, then in a third row, and so an. Similarly, when the items are arranged in a column and the column exceeds the height of the screen, it is convenient to open subsequent columns, so that the list will consist of a plurality of columns arranged side by side.

In these cases, however, when a change is animated by moving listed items over the screen, not all items can be moved in the same direction. Instead there will be some items which would have to be moved from the end of one row to the beginning of an adjacent row or from the top or bottom of one column to the bottom or top of an adjacent column, respectively. Although such movements could be animated, the result would be quite confusing and non-intuitive.

It is therefore an object of the invention to provide a method of animating changes in a list that is more intuitive, especially when the items are arranged in a two or higher dimensional array.

In order to achieve this object, the method according to the invention comprises a step of fading in or out at least one listed item.

According to this method, changes in the arrangement of the listed items are animated by fading out those items that can no longer stay in their previous position and by fading in those items that have been relocated or added to the list in their respective new positions. The process of gradually fading in or out at least one item will alert the viewer of the fact that something is being changed in the list. Nevertheless, even in case of a two-dimensional list, the viewer will not be confused by "erratic" movements of the items over the screen.

More specific optional features of the invention are indicated in the dependent claims.

The step of fading in or out at least one item may of course be combined with steps of animating movements of certain other items. For example, when an item is to be added to the list or is to be removed therefrom, this may be animated as a drag and drop operation, whereas the re-arrangement of the remaining items will be effected by fading operations.

Embodiment examples will now be described in conjunction with the drawings, wherein:
- Fig. 1: is a schematic view of a user interface; and
- Figs. 2 to 9: are schematic screen shots of a screen of the user interface, illustrating animations of changes in a list displayed on the screen.

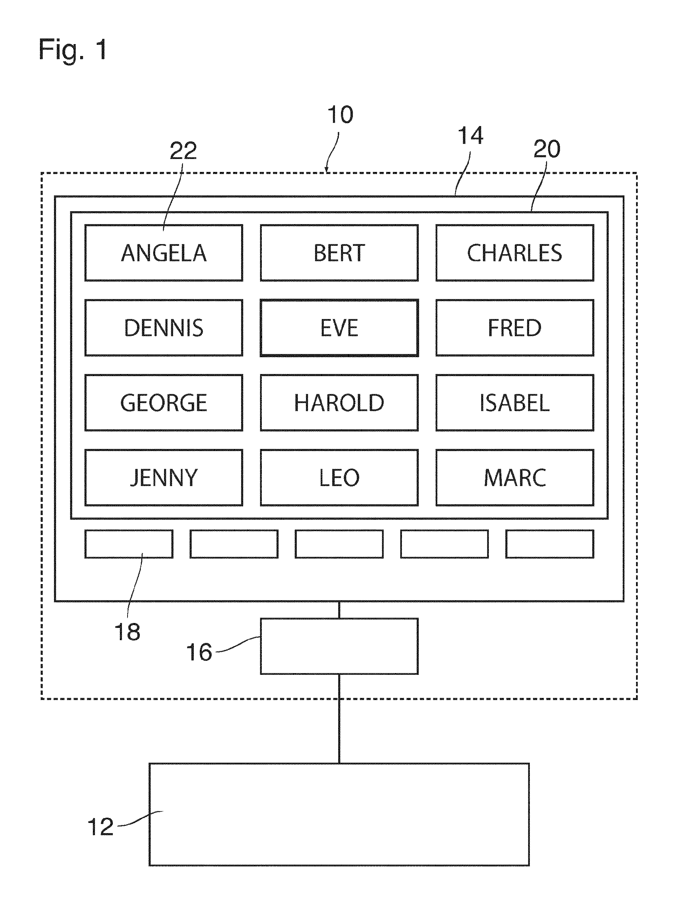

As is shown in Fig. 1, a user interface 10 of, e.g., a print apparatus 12 comprises a screen 14 and a controller 16 that communicates with the print apparatus 12 and is adapted to control the screen 14 so as to display information for the user or operator of the print apparatus.

In the example shown, the screen 14 is a touch-sensitive screen that displays among others a number of soft keys 18 permitting the user to input operating commands for the print apparatus.

In the example shown, the screen 14 displays a list 20 including a plurality of listed items 22 that are arranged in a two-dimensional array, i.e. in horizontal rows and vertical columns. By way of example, it may be assumed that the listed items 22 are print jobs waiting in a print queue to be processed in the print apparatus 12. For simplicity, the various print jobs have been designated here by the names of their owners.

Just for illustration purposes, the items 22 have been arranged in alphabetical order, starting with "ANGELA" in the top left corner of the list. The subsequent items "BERT" and "CHARLES", together with "ANGELA", form the first row of the list, followed by "DENNIS", "EVE", and so on in the second and subsequent rows.

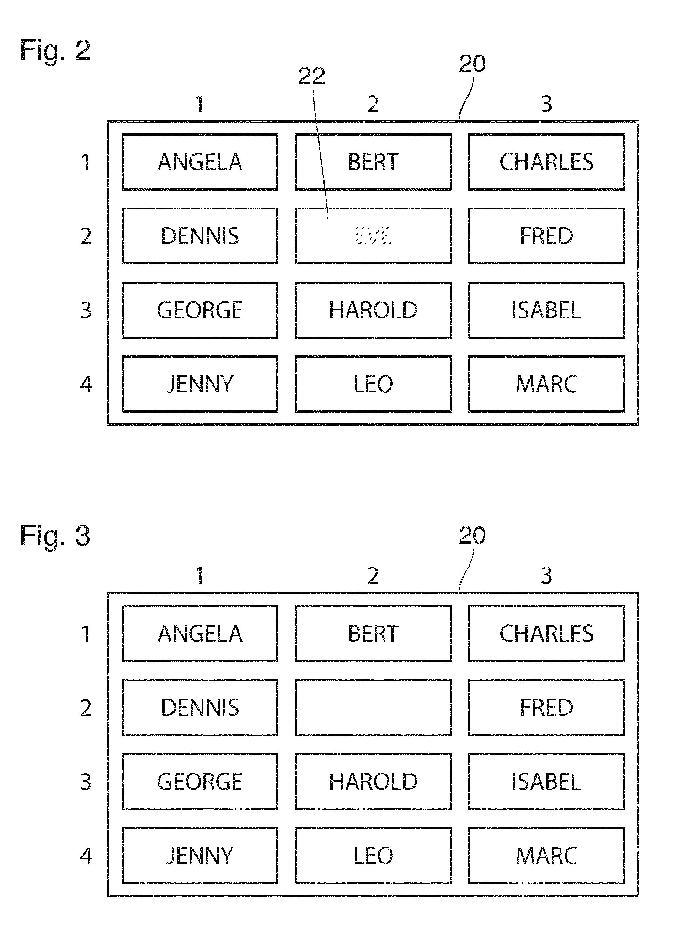

It shall be assumed now that a user or operator wants to delete the print job "EVE" from the list. To that end, the operator tips with his finger onto the item "EVE" on the screen 14, thereby activating this item. The activated state has been illustrated here by a bolder line of the box that surrounds the name "EVE". Then, by means of one of the soft keys 18 the operator gives the command to delete the activated item. As a result, the controller 16 animates a re-arrangement of the listed items 22 as will now be described in conjunction with Figs. 2 to 5.

In these figures, the rows and columns of the list 20 have been designated by their numbers, and individual positions within the list will be designated in the following description in the format (x, y), with x being the number of the row and y being the number of the column. Thus, the item to be removed, i.e. "EVE" has the position (2, 2). As is illustrated in Fig. 2, the name "EVE" is gradually faded out, thereby signalling to the operator that this item is being removed as requested. As a result, the position (2, 2), in the list will finally be empty, as shown in Fig. 3. Then, the subsequent items "FRED", "GEORGE", etc. will have to be re-arranged in order to fill the gap.

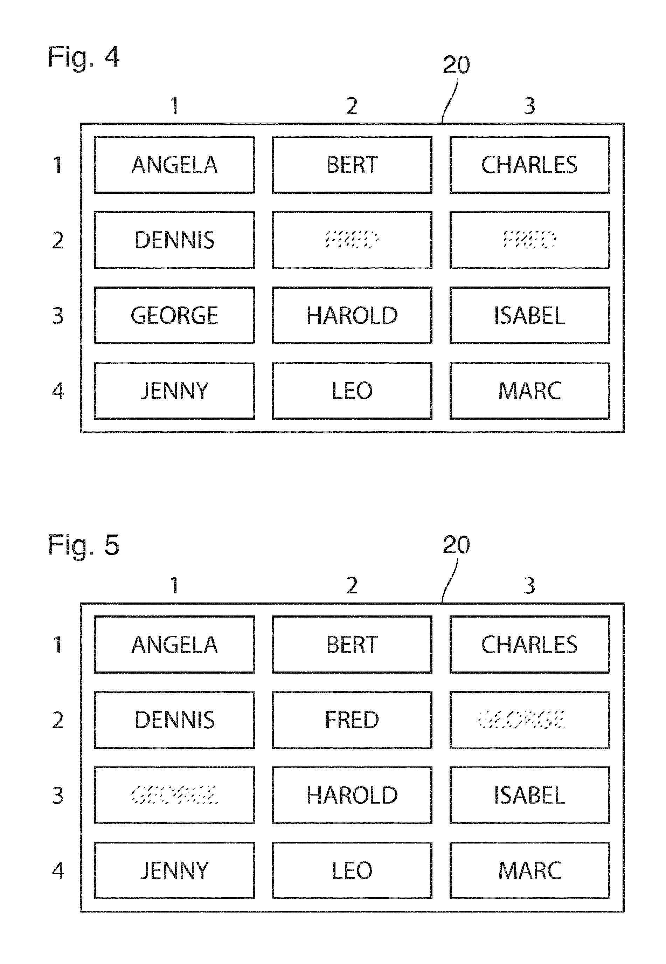

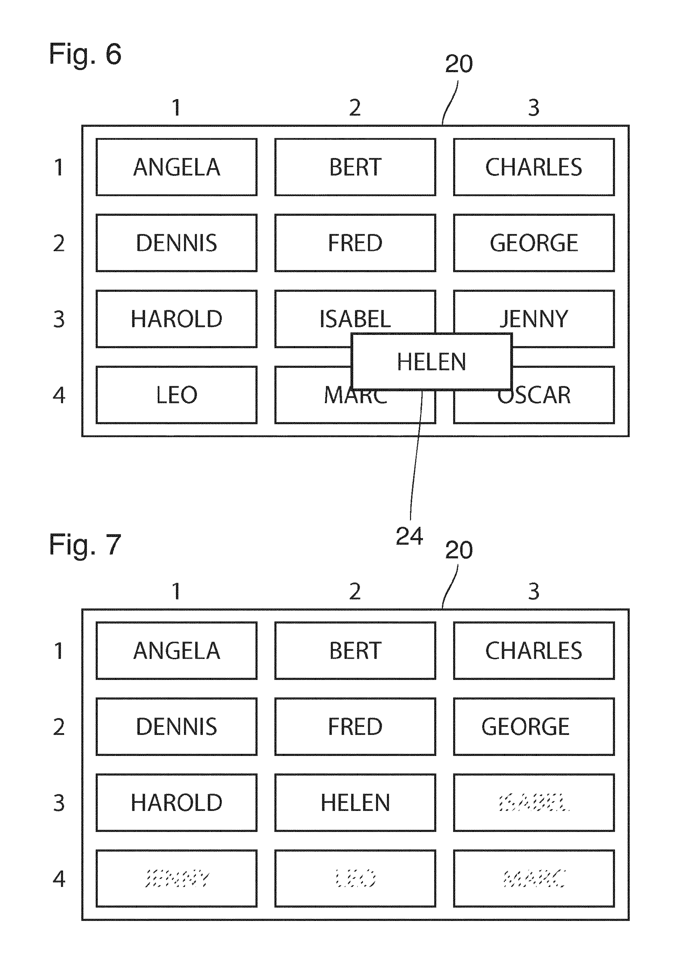

To this end, as is shown in Fig. 4, the item "FRED" is faded out in the position (2, 3) and simultaneously faded-in in the position (2, 2). As a result, the blank space shifts from (2, 2) to (2, 3). In the next step, illustrated in Fig. 5, the blank space is moved further down the list to the position (3, 1) by fading-in "GEORGE" at (2, 3) and fading-out "GEORGE" at (3, 1). In subsequent steps which have not been shown, the empty space will be moved further down the list by fading-out "HAROLD" at (3, 2) and fading it in at (3, 1), then fading in and out "ISABEL", "JENNY" and so on until the empty space has finally reached the position (4, 3), which completes the re-arrangement of the list. In case the list includes another item, e. g. "OSCAR" that could not be displayed because of the limited space of the screen, this item would now appear in the position (4, 3), as is illustrated in Fig. 6.

In order to reduce the time that is needed for the entire animation, it is possible to perform the fading steps that have been described above with a certain time overlap, so that, for example, the "GEORGE" begins already to fade-in in the position (2, 3) before the process of fading-out "FRED" in this position has ended. In the extreme, there may be a gradual blend-over from "FRED" to "GEORGE". In order to alert the viewer that "EVE" is being deleted, it is preferable however that, when "EVE" is being faded out, there is a certain delay time before the process starts with fading in the new name ("FRED") in this position.

In a modified example, when "EVE" has been faded out, the step illustrated in Fig. 4 may be replaced by a step of animating a movement of "FRED" from (2, 3) to (2, 2). However, in order to move "GEORGE" from (3, 1) to (2, 3), the fading-in and -out process is preferable, and so is the fading-in and -out process for moving "JENNY" from (4, 1) to (3, 3), whereas the movements of "HAROLD", "ISABEL", "LEO", "MARC" and "OSCAR" may be animated in the conventional way.

On the other hand, in order to shorten the procedure even more, it would be possible (and preferable) to fade-out "EVE" in a first step, then to fade out all subsequent items i.e. the items from "FRED" to "MARC", simultaneously in a second step, and then fade-in these subsequent items in their new slided-by positions in a third step. In yet another alternative, the second and third step may be performed simultaneously, so that the positions from (2), (3) to (4), (3) are respectively blended over from the old name to the new one.

When an item is to added to the list, this may generally be done by performing the steps of one of the procedures described above in reverse order.

Figs. 6 and 7 illustrate an alternative example of a method of adding a new item "HELEN" to the list. This process may be initiated for example by scanning-in a new print job, whereupon an empty box 24 is displayed somewhere on the screen 14 and the user or operator is prompted to type in the name of this job (if the name is not transmitted together with the print data from a remote location). The insertion of the new item "HELEN" in the appropriate position in the list may then be controlled by the controller 16 or may be controlled manually by the user. In the latter case, the user will tip with his finger on "HELEN" on the touch-screen and will move this item to the correct position which will in this case be (3, 2), if the items are sorted in alphabetical order. As a consequence, "ISABEL" will be hidden by the new item. Then, as is shown in Fig. 7, all items from "JENNY" to "MARC" will be faded out in their old positions, and simultaneously or later the items from "ISABEL" to "MARC" will be faded-in in their new positions, which completes the re-arrangement of the list.

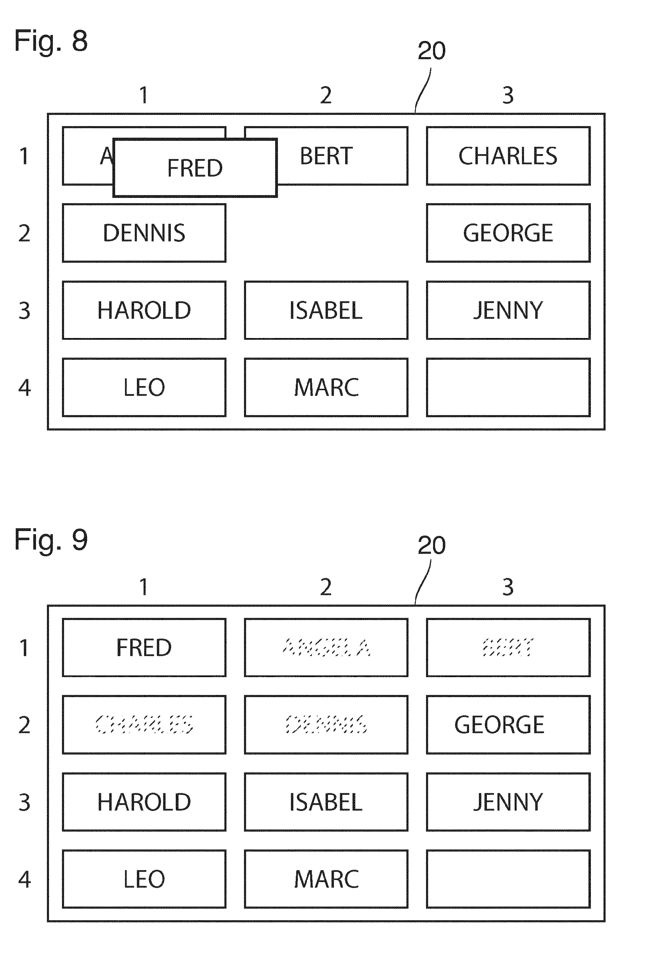

Similarly, the user or operator may change the order in which the print jobs are processed by changing the sequence of the items in the list 20. For example, Figs. 8 and 9 illustrate a case where an operator wants to put "FRED" on the top of the list. To that end, "FRED" is activated with a finger tip and drawn to the position (1, 1), thereby hiding "ANGELA". Then, by fading-in and -out, the items from "ANGELA" to "DENNIS" are moved to their new positions, as shown in Fig. 9. In this case, the items from "GEORGE" to "MARC" are not affected.

Animated movements may also be used to delete items from the list, e.g. by tipping on the item and wiping rapidly with the finger towards an edge of the screen so as to "kick away" the item. In the same way, when the screen 14 displays two more lists at a time, items may be moved by drag and drop from one list to the other, with the remaining items in both lists being re-arranged by means of fade-in and fade-out.

When the list 20 is larger than the space available on the screen 14, so that only a part of the list can be shown at a time, it is possible to animate scroll movements which, on a touch screen, may be controlled with the finger tip as is known for smartphone screens. Then, when an item is added or deleted under the control of the print apparatus 12, for example, when a new print job is received from a remote workstation, the controller 16 will animate a scroll movement of the list 20 into a position where the location at which the new item is to be deleted or inserted is visible on the screen and will then animate a fade-in and -out procedure analogous to the one of the procedures described above.

## Claims

1. A method of animating a change in the arrangement of listed items (22) in a list, comprising a number of subsequent positions (20), that is displayed on a screen (14), wherein the items (22) of the list (20) are arranged in rows and columns **characterized by** a step of fading-in or -out at least one listed item.

2. The method according to claim 1, wherein, when the change includes an item being shifted from one row to another or from one column to another, this item is faded-out in the old position and faded-in in the new position.

3. The method according to claim 1 or 2, wherein steps of fading-out an item in one position and fading-in another item in the same position are performed with time overlap.

4. The method according to any of the preceding claims, wherein, when an item is to be deleted form the list, this item is faded-out and animations re-arranging the remaining items are started with a time delay after the fade-out of the removed item has started.

5. The method according to any of the preceding claims, wherein, when a new item is to be added to the list (20), a re-arrangement of the items already present in the list is animated so as to create a blank space in the list, and the new item is faded-in at the blank space.

6. The method according to any of the preceding claims, comprising animating a movement of at least one item within the list or out of the list or into the list in combination with fading-in or -out at least one other item.

7. The method according to any of claim 1-3, wherein, when an item is to be deleted from the list, this item is faded-out in a first step, all items subsequent to the item to be deleted are faded-out simultaneously in a second step and are faded-in simultaneously in new slided-by positions in a third step.

8. A user interface (10) comprising a screen (14) and a controller (16) controlling the screen, **characterized in that** the controller (16) is configured to perform a method according to any of the preceding claims.

9. The user interface according to claim 8, wherein the screen (14) is a touch-sensitive screen.

10. A software product comprising program code that, when run on a controller (16) of a user interface (10), causes the controller to perform a method according to any of the claims 1 to 7.
